**Europäisches Patentamt**

**European Patent Office**

**Office européen des brevets**

(19)

(11) Veröffentlichungsnummer: **0 223 123**
**B1**

(12) # EUROPÄISCHE PATENTSCHRIFT

(45) Veröffentlichungstag der Patentschrift:
10.01.90

(51) Int. Cl.⁴: **G01F 1/66**

(21) Anmeldenummer: 86114993.8

(22) Anmeldetag: 28.10.86

(54) **Ultraschall-Durchflussmesseinrichtung.**

(30) Priorität: 11.11.85 DE 3539948

(43) Veröffentlichungstag der Anmeldung:
27.05.87 Patentblatt 87/22

(45) Bekanntmachung des Hinweises auf die Patenterteilung:
10.01.90 Patentblatt 90/2

(84) Benannte Vertragsstaaten:
CH DE FR GB IT LI NL SE

(56) Entgegenhaltungen:
FR-A- 2 509 461
GB-A- 2 023 825
US-A- 3 555 899

SIEMENS POWER ENGINEERING, Band 6, Nr. 5,
September/Oktober 1984, Seiten 287-289, Passau, DE;
H. RITTNER: "Systems and equipment Heat metering
with ultrasound"

(73) Patentinhaber: Siemens Aktiengesellschaft,
Wittelsbacherplatz 2, D-8000 München 2(DE)

(72) Erfinder: Stark, Reinhard, Dipl.-Ing., Wodanstrasse 20,
D-8500 Nürnberg(DE)

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Ultraschall-Durchflußmeßeinrichtung nach dem Laufzeitverfahren mit einem Rohr, das einen rechteckförmigen Innenquerschnitt aufweist, und bei dem an zueinander parallelen Innenwänden oder an derselben Innenwand zwei Ultraschallwandler angeordnet sind.

Eine solche Durchflußmeßeinrichtung ist aus der Druckschrift "SIEMENS POWER ENGINEERING", Band 6, Nr. 5, September/Oktober 1984, Seiten 287–289, bekannt.

Die theoretischen Zusammenhänge einer Ultraschall-Durchflußmeßeinrichtung dieser Art sind beispielsweise in der DE-OS 2 828 937 erläutert. Die Ultraschallwandler dienen dabei als kombinierte Sende- und Empfangswandler. Dabei können die Ultraschallwandler als sogenannte Interdigitalwandler gemäß der DE-OS 3 020 282 ausgeführt werden, die eine schräg zur Oberfläche liegende Abstrahlbzw. Empfangsrichtung haben. Die Geschwindigkeit bzw. der Durchfluß des im Rohr strömenden Mediums wird dadurch ermittelt, daß man die Unterschiede der Laufzeiten von Ultraschallwellen in Strömungsrichtung des Mediums und entgegengesetzt zu dieser Strömungsrichtung mißt. Bei diesem Verfahren wurden bisher Reflexionen an der Rohrinnenwand stets als unerwünscht angesehen, da reflektierte Ultraschallwellen aufgrund verschiedener Laufwege zu unkontrollierbaren Einflüssen auf das Meßergebnis führen. Die Rohrinnenwand wurde daher bei handelsüblichen Geräten stets aus Kunststoff mit hoher Ultraschalldämpfung ausgeführt.

Es hat sich jedoch herausgestellt, daß diese Meßeinrichtung noch eine gewisse Abhängigkeit des Meßergebnisses vom Strömungsprofil aufweist. Diese Abhängigkeit macht sich durch Nichtlinearität und Temperaturabhängigkeit bemerkbar, solange im geforderten Durchfluß- und Temperaturbereich sowohl laminare als auch turbulente Strömung vorkommt.

Aufgabe der Erfindung ist es daher, die Abhängigkeit des Meßergebnisses vom Strömungsprofil zu reduzieren.

Diese Aufgabe wird erfindungsgemäß dadurch gelöst, daß die senkrecht zu den Ultraschallwandlern liegenden Rohrinnenwände wenigstens im Bereich der Ultraschallwellen aus Metall ausgeführt sind. Diese Metallwände reflektieren die auftreffenden Ultraschallwellen, wobei sich überraschenderweise herausgestellt hat, daß so wesentliche Verbesserungen der oben geschilderten Fehler eintreten.

Das Rohr kann ganz aus Metall bestehen und die zu den Ultraschallwandlern parallel liegenden Wandteile mit Ausnahme von Reflektorflächen mit ultraschall-absorbierendem Material ausgelegt sein.

Alternativ kann das Rohr auch aus Kunststoff mit hoher Ultraschalldämpfung bestehen, wobei die senkrecht zu den Ultraschallwandlern liegenden Wandteile sowie gegebenenfalls Reflektorflächen mit Metall ausgelegt sind.

Die Erfindung beruht auf der Erkenntnis, daß die Strömungsprofil-Abhängigkeit herkömmlicher Meßeinrichtungen aus einer ungenügend gleichmäßigen Durchschallung des Meßstrecken-Querschnitts quer zur Ultraschall-Strahlrichtung resultiert.

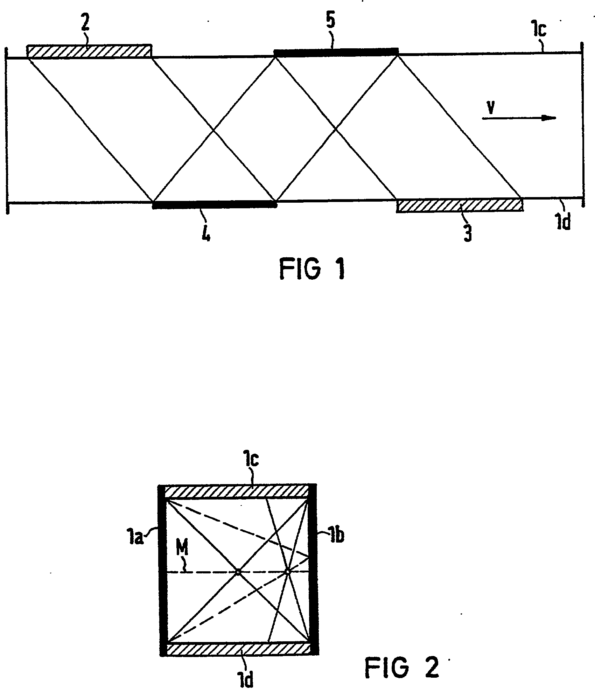

Dies wird nachfolgend anhand der Figuren 1 und 2 näher erläutert.

Fig. 1 zeigt einen Längsschnitt durch die Ultraschall-Meßstrecke

Fig. 2 einen entsprechenden Querschnitt.

Die Ultraschall-Meßstrecke besteht aus einem rechteckförmigen Rohr mit jeweils parallel zueinander liegenden Seitenwänden 1a und 1b sowie 1c und 1d. An den Seitenwänden 1c und 1d ist jeweils ein Ultraschallwandler als kombinierter Sende- und Empfangswandler 2 bzw. 3 vorgesehen. Diese Wandler strahlen schräg ab, wobei der Ultraschallwandler 2 gegen einen Reflektor 4 auf der gegenüberliegenden Seitenwand 1d strahlt, die Ultraschallwellen von dem Reflektor 4 auf einen weiteren Reflektor 5 auf der Seitenwand 1c und von dort auf den Ultraschallwandler 3 gelenkt werden. Durch diese doppelte Reflexion wird die Laufstrecke der Ultraschallwellen parallel zur Strömungsrichtung v verlängert. Um unkontrollierte Reflexionen zu vermeiden, sind die Seitenwände 1c und 1d im Bereich außerhalb der Ultraschallwandler 2, 3 und der Reflektoren 4, 5 ultraschall-absorbierend ausgeführt.

Die Abhängigkeit vom Strömungsprofil bei herkömmlichen Meßeinrichtungen wird nachfolgend anhand der Fig. 2 näher erläutert. Es wird angenommen, daß der Wandler 2 als Sendewandler und der Wandler 3 als Empfangswandler arbeitet. Der Sendewandler strahlt nicht nur senkrecht zu seiner Oberfläche sondern, mit geringerer Intensität, auch schräg dazu ab. Selbst bei einem völlig planparallel schwingenden Sendewandler und einem idealen Verhalten des Empfangswandlers treffen ohne Reflexion der Seitenwände nicht alle schräg ausgesandten Strahlen des Sendewandlers auf den Empfangswandler 3. Nur die durch den Mittelpunkt der Mittelebene M führenden Strahlen werden vollständig vom Empfangswandler erfaßt. Je weiter der Punkt aus der Mitte zum Rand wandert, desto mehr zugeordnete Sendestrahlen dringen in die Seitenwand ein, werden dort bei herkömmlichen Anordnungen bedämpft und tragen daher nicht zur Meßwertbildung bei. Die Meßstreckenmitte wird daher stärker gewichtet als die Randbereiche. Dies führt bei laminarer Strömung zu positiven Fehlern gegenüber turbulenter Strömung.

Wenn man gemäß der Erfindung die Seitenwände 1a und 1b aber aus Metall bzw. aus mit Metall ausgelegtem Kunststoff ausführt, werden die auftreffenden Ultraschallwellen reflektiert, was zu einer deutlichen Verringerung der Strömungsprofilabhängigkeit des Meßergebnisses führt.

**Patentansprüche**

1. Ultraschall-Durchflußmeßeinrichtung nach dem Laufzeitverfahren mit einem Rohr (1), das einen rechteckförmigen Innenquerschnitt aufweist, und bei dem an zueinander parallelen Innenwänden je ein oder an derselben Innenwand zwei Ultraschallwandler (2, 3) angeordnet sind, dadurch gekennzeichnet, daß die senkrecht zu den Ultraschallwandlern (2, 3) liegenden Rohrinnenwände (1a, 1b) wenigstens im Bereich der Ultraschallwellen aus Metall ausgeführt sind.

2. Ultraschall-Durchflußmeßeinrichtung nach Anspruch 1, **dadurch gekennzeichnet**, daß das Rohr (1) ganz aus Metall besteht und daß die zu den Ultraschallwandlern (2, 3) parallel liegenden Wandteile (1c, 1d) mit Ausnahme von Reflektorflächen (4, 5) mit ultraschall-absorbierendem Material ausgelegt sind.

3. Ultraschall-Durchflußmeßeinrichtung nach Anspruch 1, **dadurch gekennzeichnet**, daß das Rohr (1) aus Kunststoff mit hoher Ultraschalldämpfung besteht und daß die senkrecht zu den Ultraschallwandlern (2, 3) liegenden Wandteile (1a, 1b) sowie ggf. Reflektorflächen mit Metall ausgelegt sind.

## Claims

1. Ultrasonic flow measuring device according to the echo time method having a tube (1) which has a rectangular inner cross section and in which, an ultrasonic transducer (2, 3) is arranged on each of inner walls which are parallel to each other, or there are two ultrasonic transducers (2, 3) arranged on the same inner wall, characterised in that the tube inner walls (1a, 1b) which lie perpendicular to the ultrasonic transducers (2, 3) are constructed of metal at least in the region of the ultrasonic waves.

2. Ultrasonic flow measuring device according to claim 1, characterised in that the tube (1) is made entirely of metal and in that the wall portions (1c, 1d), which lie parallel to the ultrasonic transducers (2, 3), with the exception of reflector surfaces (4, 5), are lined with ultrasound-absorbing material.

3. Ultrasonic flow measuring device according to claim 1, characterised in that the tube (1) is made of plastics material with high ultrasound attenuation and in that the wall portions (1a, 1b), which lie perpendicular to the ultrasonic transducers (2, 3), and also, if applicable, reflector surfaces, are lined with metal.

## Revendications

1. Dispositif à ultrasons de mesure de débits selon le procédé basé sur les temps de propagation, comportant un tube (1) possédant une section transversale intérieure rectangulaire, et dans lequel, sur des parois intérieures parallèles ou sur la même paroi intérieure, se trouvent disposés respectivement un ou deux transducteurs à ultrasons (2, 3), caractérisé par le fait que les parois intérieures (1a, 1b) du tube, qui sont perpendiculaires au transducteur à ultrasons (2, 3), sont réalisées en un métal, au moins dans la zone des ondes ultrasonores.

2. Dispositif de mesure de débits à ultrasons suivant la revendication 1, caractérisé par le fait que le tube (1) est entièrement métallique et que les éléments de paroi (1c, 1d), qui sont parallèles aux transducteurs à ultrasons (2, 3), sont réalisés en un matériau absorbant les ultrasons, hormis au niveau de surfaces réfléchissantes (4, 5).

3. Dispositif de mesure de débits à ultrasons suivant la revendication 1, caractérisé par le fait que le tube (1) est réalisé en une matière plastique réalisant un affaiblissement élevé des ultrasons et que les éléments de paroi (1a, 1b), qui sont perpendiculaires aux transducteurs à ultrasons (2, 3) ainsi que, éventuellement, des surfaces réfléchissantes, sont métalliques.

FIG 1

FIG 2